# EUROPÄISCHE PATENTSCHRIFT

(11) **EP 3 406 937 B1**
(45) Veröffentlichungstag und Bekanntmachung des Hinweises auf die Patenterteilung: **01.07.2020**
(21) Anmeldenummer: 18173939.2
(22) Anmeldetag: 24.05.2018
(51) Int. Cl.: F16H 49/00

(54) **SPANNUNGSWELLENGETRIEBE**
PRESSURE WAVE TRANSMISSION
TRANSMISSION À ONDES DE TENSION

(30) Priorität: 24.05.2017 LU 100266
(43) Veröffentlichungstag der Anmeldung: 28.11.2018
(73) Patentinhaber: Ovalo GmbH, 65555 Limburg (DE)
(72) Erfinder:
(74) Vertreter: Hoffmann, Jürgen

(56) Entgegenhaltungen:
- EP-A1- 2 184 514
- EP-A1- 3 141 777
- DE-C1- 3 211 616
- SU-A1- 1 087 722

## Beschreibung

Die Erfindung betrifft ein Spannungswellengetriebe mit vier innenverzahnten Hohlrädern, von denen ein erstes und ein zweites mit einer ersten radialflexiblen, außenverzahnten Hülse in Zahneingriff stehen und von denen ein drittes und ein viertes mit einer zweiten radialflexiblen, außenverzahnten Hülse in Zahneingriff stehen.

Ein Spannungswellengetriebe, auch Wellgetriebe oder Gleitkeilgetriebe genannt, weist zumeist einen Wellengenerator auf, der in einer radialflexiblen, außenverzahnten Hülse, die auch Flexspline genannt wird, rotierbar gelagert ist. In Ringbauweise sind zwei innenverzahnte Hohlräder unterschiedlicher Zähnezahl vorhanden, deren Verzahnungen mit der Außenverzahnung der radialflexiblen, außenverzahnten Hülse in Zahneingriff stehen. Zumeist weist eines der innenverzahnten Hohlräder dieselbe Anzahl von Zähnen auf, wie die radialflexible, außenverzahnte Hülse. Dieses innenverzahnte Hohlrad wird Circularspline genannt. Das andere innenverzahnte Hohlrad weist zumeist mehr Zähne auf, als die radialflexible, außenverzahnte Hülse. Dieses innenverzahnte Hohlrad wird Dynamicspline genannt.

Ein Spannungswellengetriebe dieser Art ist beispielsweise aus EP 2 184 514 B1 bekannt. Konkret offenbart diese Patentschrift ein Spannungswellengetriebe mit einem Wellengenerator zum Erzeugen einer Drehbewegung und einem Flexspline an dessen Innenumfang oder Außenumfang wenigstens ein Bauteil angreift, welches die Drehbewegung des Wellengenerators auf den Flexspline überträgt, wobei der Flexspline mit seinem Außenumfang oder Innenumfang an einem Circularspline und einem Dynamicspline angreift. Der Circularspline und der Dynamicspline sind jeweils als Hohlring ausgebildet, an dessen Innenumfang jeweils der Flexspline mit denjenigen Abschnitten angreift, welche durch den Wellengenerator jeweils radial nach außen verformt sind. Durch die Wellbewegung des Wellengenerators werden somit eine Drehbewegung des Flexsplines und gleichzeitig eine Drehbewegung des starren Übertragungselementes bewirkt.

Spannungswellengetriebe zeichnen sich durch eine besonders hohe Torsionssteifigkeit und durch ihre Spielfreiheit aus. Außerdem können mit Spannungswellengetrieben vergleichsweise hohe Drehmomente übertragen werden. Allerdings kann es bei einer zu hohen Drehmomentbelastung zu Störungen, insbesondere Zahneingriffsstörungen, und/oder zu einer Beschädigung kommen. Aus diesem Grund ist es erforderlich, die Größe, insbesondere die radialen Abmessungen, des Spannungswellengetriebes an die voraussichtliche Belastung angepasst auszuwählen. Hierbei gilt, dass das Spannungswellengetriebe, insbesondere radial, umso größer ausgebildet werden muss, je größer die voraussichtliche Drehmomentbelastung ist.

Aus DE 32 11 616 C1 ist ein Getriebe bekannt, das in einer Ausführung als Schaltgetriebe ausgebildet ist und zwei jeweils als Gleitkeilgetriebe ausgebildete Stufen aufweist. Die beiden Stufen weisen einen einander entsprechenden Aufbau auf.

Es ist die Aufgabe der vorliegenden Erfindung, ein Spannungswellengetriebe anzugeben, das bei radial kleinem Bauraum ein besonders hohes Drehmoment übertragen kann.

Die Aufgabe wird durch ein Spannungswellengetriebe gelöst, das dadurch gekennzeichnet ist, dass die erste radialflexible, außenverzahnte Hülse einen Ankoppelabschnitt aufweist, der koaxial von der zweiten radialflexiblen, außenverzahnten Hülse umgeben ist.

Das erfindungsgemäße Spannungswellengetriebe hat im Vergleich zu üblichen Spannungswellengetrieben den ganz besonderen Vorteil, dass bei gleicher radialer Baugröße zumindest etwa das doppelte Drehmoment übertragen werden kann. Insbesondere hat das erfindungsgemäße Spannungswellengetriebe den ganz besonderen Vorteil, dass eine Verkopplung der zusammenwirkenden Elemente derart erfolgen kann, dass bei weitgehend gleicher radialer Baugröße auch noch ganz wesentlich höhere Drehmomente als das doppelte Drehmoment übertragen werden können, was weiter unten im Detail beschrieben ist.

Der Erfindung liegt unter anderem die Idee zu Grunde, zwei (oder mehr) Unterspannungswellengetriebe, insbesondere ausschließlich durch Kopplung der Hauptelemente jedes der Unterspannungswellengetriebe, parallel zu schalten.

Außerdem liegt der Erfindung die weitere Idee zu Grunde, dass zwei (oder mehr) räumlich ineinander geschachtelte radialflexible Hülsen, einerseits eine hohe Robustheit gegen eine ungewollte Verformung, die Zahneingriffsstörungen nach sich ziehen könnte, aufweist, aber dennoch (ähnlich wie gestapelte Blattfedern) die zum Betrieb eines Spannungswellengetriebes erforderliche radiale Flexibilität aufweisen.

Bei einer vorteilhaften Ausführung sind die innenverzahnten Hohlräder koaxial zueinander, insbesondere koaxial nebeneinander, angeordnet. Eine solche Ausführung ist besonders kompakt und kann besonders bauraumsparend ausgebildet werden.

Insbesondere zur Realisierung der oben erwähnten Parallelschaltung kann vorteilhaft vorgesehen sein, dass das dritte und das vierte Hohlrad räumlich zwischen dem ersten und dem zweiten Hohlrad angeordnet sind. Eine solche Ausführung ist besonders kompakt realisierbar, wobei dennoch gewährleistet ist, dass das erste und das zweite innenverzahnte Hohlrad einerseits relativ zu dem dritten und vierten innenverzahnen Hohlrad andererseits rotieren können.

Vorzugsweise weist das erste innenverzahnte Hohlrad dieselbe Anzahl von Zähnen auf, wie das dritte innenverzahnte Hohlrad. Alternativ oder zusätzlich ist vorzugsweise außerdem vorgesehen, dass das zweite innenverzahnte Hohlrad dieselbe Anzahl von Zähnen aufweist, wie das vierte innenverzahnte Hohlrad.

Bei einer vorteilhaften Ausführung ist das erste innenverzahnte Hohlrad drehfest mit dem dritten innenverzahnte Hohlrad verbunden. Insbesondere können das erste Hohlrad und das dritte Hohlrad dadurch indirekt drehfest miteinander verbunden sein, dass sie beide jeweils drehfest mit derselben Welle des Spannungswellengetriebes verbunden sind. Alternativ kann beispielsweise auch vorgesehen sein, dass das erste innenverzahnte Hohlrad gemeinsam einstückig mit dem dritten innenverzahnte Hohlrad aus demselben Stück Rohmaterial hergestellt ist.

Analog kann vorteilhaft vorgesehen sein, dass das zweite innenverzahnte Hohlrad drehfest mit dem vierten innenverzahnten Hohlrad verbunden ist. Insbesondere können das zweite innenverzahnte Hohlrad und das vierte innenverzahnte Hohlrad dadurch indirekt drehfest miteinander verbunden sein, dass sie beide jeweils drehfest mit derselben Welle des Spannungswellengetriebes, die nicht die Welle ist, die mit dem ersten und dritten innenverzahnten Hohlrad verbunden ist, verbunden sind. Alternativ kann beispielsweise auch vorgesehen sein, dass das zweite innenverzahnte Hohlrad gemeinsam einstückig mit dem vierten innenverzahnten Hohlrad aus demselben Stück Rohmaterial hergestellt ist.

Vorzugsweise weist der Ankoppelabschnitt einen Außenumfangsbereich ohne Außenverzahnung auf. Insbesondere kann hierbei vorteilhaft vorgesehen sein, eine Innenumfangsfläche der zweiten radialflexiblen Hülse unmittelbar an dem Außenumfangsbereich ohne Außenverzahnung der ersten radialflexiblen Hülse anliegt. Eine solche Kopplung der ersten und der zweiten radialflexiblen Hülse ist besonders stabil, da sich die Hülsen gegenseitig stützen, und erlaubt dennoch eine ausreichende radiale Flexibilität der Hülsen, da die Hülsen lediglich aneinander anliegen und daher eine geringe Bewegung der Hülsen relativ zueinander möglich ist.

Bei einer besonderen Ausführung ist wenigstens eine Axialsicherungsvorrichtung vorhanden, die die zweite radialflexible Hülse gegen eine axiale Verschiebung relativ zu der ersten radialflexiblen Hülse und/oder relativ zu einem der Hohlräder verhindert. Beispielsweise kann die Axialsicherungsvorrichtung einen in einer umlaufenden Nut eines der Hohlräder gehalterten Sicherungsring aufweisen. Der Sicherungsring kann vorteilhaft als geschlitzter und/oder radialflexibler Federring ausgebildet sein. Es ist, alternativ oder zusätzlich auch möglich, dass die Axialsicherungsvorrichtung durch einen Vorsprung an einem der Hohlräder gebildet ist oder dass die Axialsicherungsvorrichtung durch eine wenigstens in einem Teilbereich modifizierte Verzahnung wenigstens eines der Hohlräder und/oder der zweiten radialflexiblen Hülse gebildet ist. Bei einer besonderen Ausführung fungiert die Verzahnung der ersten radialflexiblen Hülse als Axialsicherungsvorrichtung und sichert die zweite radialflexible Hülse axial.

Das Spannungswellengetriebe weist vorzugsweise einen Wellengenerator auf, der die erste radialflexible Hülse und die zweite radialflexible Hülse direkt oder indirekt in eine ovale Form biegt. Insbesondere kann vorteilhaft vorgesehen sein, dass ein Wellengenerator vorhanden ist, der die erste radialflexible Hülse und die zweite radialflexible Hülse gemeinsam und gleichzeitig in eine ovale Form biegt, und/oder dass die mittels eines Wellengenerators zu einer ovalen Form gebogene erste radialflexible Hülse ihrerseits die zweite radialflexible Hülse zu einer ovalen Form biegt. Bei einer besonderen Ausführung weist das Spannungswellengetriebe einen Wellengenerator auf, der die erste radialflexible Hülse und die zweite radialflexible Hülse in eine im Querschnitt ovale Form biegt, so dass die Außenverzahnung der ersten radialflexiblen, außenverzahnten Hülse an zwei gegenüberliegenden Stellen mit den Innenverzahnungen des ersten und zweiten innenverzahnten Hohlrades in Zahneingriff gelangt. Die erste radialflexible Hülse wiederum überträgt ihre, durch den Wellengenerator bewirkte, ovale Form auf die, vorzugsweise unmittelbar, anliegende zweite radialflexible Hülse, so dass deren Außenverzahnung an zwei gegenüberliegenden Stellen in Zahneingriff mit den Innenverzahnungen des dritten innenverzahnten Hohlrades und des vierten innenverzahnten Hohlrades gelangt.

Der Wellengenerator kann mittels wenigstens eines radialflexiblen Lagers rotierbar innerhalb der ersten radialflexiblen Hülse gelagert sein. Das radialflexible Lager kann insbesondere ein Wälzlager oder ein mehrreihiges, radialflexibles Wälzlagers sein.

Der Wellengenerator kann im Querschnitt eine ovale, insbesondere eine elliptische, Form aufweisen. Es ist alternativ beispielsweise auch möglich, dass der Wellengenerator in Form eines sogenannten Tworollers ausgebildet ist, der zwei exzentrisch angeordnete Rollen aufweist, die auf der Innenseite der ersten radialflexiblen Hülse abrollen und die erste radialflexible Hülse in eine ovale Form biegen.

Vorzugsweise ist der Wellengenerator axial genauso lang oder länger, als die erste radialflexible Hülse. Insbesondere kann vorteilhaft vorgesehen sein, dass der Wellengenerator wenigstens eine Axialsicherung aufweist, die das radialflexible Lager gegen eine axiale Verschiebung sichert. Insbesondere bei einer solchen Ausführung kann der Wellengenerator axial länger ausgebildet sein, als die erste radialflexible Hülse.

Besonders robust ist eine Ausführung, bei der der Wellengenerator einteilig ausgebildet ist. Der Wellengenerator kann jedoch auch mehrteilig aufgebaut sein. Insbesondere kann vorgesehen sein, dass der Wellengenerator wenigstens zwei synchron angetriebene, insbesondere axial nebeneinander angeordnete, Wellengeneratorteile aufweist.

Nach einem besonderen Erfindungsgedanken ist es vorteilhaft möglich, der oben erwähnten Parallelschaltung zweier Unterspannungswellengetriebe zusätzlich ein drittes (oder noch mehr) Unterspannungswellengetriebe parallel zu schalten, um noch höhere Drehmomente bei im Wesentlichen unveränderter radialer Größe übertragen zu können.

Bei einer besonderen Ausführung sind hierzu ein fünftes und ein sechstes innenverzahntes Hohlrad vorhanden, die mit einer dritten radialflexiblen, außenverzahnten Hülse in Zahneingriff stehen, wobei die dritte radialflexible, außenverzahnte Hülse einen weiteren Ankoppelabschnitt aufweist, der koaxial von der ersten radialflexiblen, außenverzahnten Hülse umgeben ist. Insbesondere kann hierbei vorteilhaft vorgesehen sein, dass das fünfte und das sechste innenverzahnte Hohlrad koaxial zu dem ersten, zweiten, dritten und vierten innenverzahnten Hohlrad angeordnet sind. Besonders kompakt ist eine Ausführung, bei der das erste, zweite, dritte und vierte innenverzahnte Hohlrad räumlich zwischen dem fünften und dem sechsten innenverzahnten Hohlrad angeordnet sind.

Vorzugsweise weist das fünfte innenverzahnte Hohlrad dieselbe Anzahl von Zähnen auf, wie das dritte und das erste innenverzahnte Hohlrad. Alternativ oder zusätzlich ist vorzugsweise vorgesehen, dass das sechste innenverzahnte Hohlrad dieselbe Anzahl von Zähnen aufweist, wie das vierte innenverzahnte Hohlrad und das zweite innenverzahnte Hohlrad.

Bei einer vorteilhaften Ausführung sind das erste innenverzahnte Hohlrad, das dritte innenverzahnte Hohlrad und das fünfte innenverzahnte Hohlrad drehfest miteinander verbunden. Insbesondere können das erste, das dritte und das fünfte innenverzahnte Hohlrad dadurch indirekt drehfest miteinander verbunden sein, dass sie alle drei drehfest mit derselben Welle des Spannungswellengetriebes verbunden sind. Alternativ kann beispielsweise auch vorgesehen sein, dass das erste innenverzahnte Hohlrad, das dritte innenverzahnte Hohlrad und das fünfte innenverzahnte Hohlrad gemeinsam einstückig aus demselben Stück Rohmaterial hergestellt sind.

Analog kann vorteilhaft vorgesehen sein, dass das zweite innenverzahnte Hohlrad, das vierte innenverzahnte Hohlrad und das sechste innenverzahnte Hohlrad drehfest miteinander verbunden sind. Insbesondere können das zweite, das vierte und das sechste innenverzahnte Hohlrad dadurch indirekt drehfest miteinander verbunden sein, dass sie alle drei drehfest mit derselben Welle des Spannungswellengetriebes, die nicht die Welle ist, die mit dem ersten, dem dritten und dem fünften innenverzahnten Hohlrad verbunden ist, verbunden sind. Alternativ kann beispielsweise auch vorgesehen sein, dass das zweite innenverzahnte Hohlrad, das vierte innenverzahnte Hohlrad und das sechste innenverzahnte Hohlrad gemeinsam einstückig aus demselben Stück Rohmaterial hergestellt sind.

Bei einer vorteilhaften Ausführung weist der weitere Ankoppelabschnitt einen Außenumfangsbereich ohne Außenverzahnung auf. Hierbei kann vorteilhaft insbesondere vorgesehen sein, dass eine Innenumfangsfläche der ersten radialflexiblen Hülse unmittelbar an dem Außenumfangsbereich des weiteren Ankoppelabschnitts der dritten radialflexiblen Hülse anliegt.

Bei einer besonderen Ausführung ist vorgesehen, dass die mittels eines Wellengenerators zu einer ovalen Form gebogene dritte radialflexible Hülse die erste radialflexible Hülse zu einer ovalen Form biegt und diese die zweite radialflexible Hülse zu einer ovalen Form biegt. Alternativ oder zusätzlich kann auch vorgesehen sein, dass ein Wellengenerator vorhanden ist, der die erste, zweite und dritte radialflexible Hülse gemeinsam und gleichzeitig - jeweils direkt oder indirekt - in eine ovale Form biegt.

Von besonderem Vorteil ist ein aktives Fahrwerk, das zumindest ein erfindungsgemäßes Spannungswellengetriebe aufweist. Insbesondere bei einer solchen Anwendung kommt die radiale Kompaktheit des erfindungsgemäßen Spannungswellengetriebes besonders zum Tragen.

Ganz besonders vorteilhaft kann eine Vorrichtung zum Verstellen des Expansionshubes und/oder des Verdichtungsverhältnisses eines Verbrennungsmotors, ein erfindungsgemäßes Spannungswellengetriebe aufweisen. Das erfindungsgemäße Spannungswellengetriebe kann insbesondere Teil eines kompakten Aktuators zum Einstellen der Drehstellung einer Verstellwelle zum Verstellen des Expansionshubes und/oder des Verdichtungsverhältnisses eines Verbrennungsmotors sein. Der Aktuator kann einen Antriebsmotor beinhalten, dem das erfindungsgemäße Spannungswellengetriebe triebtechnisch nachgeschaltet ist.

Von besonderem Vorteil ist ein programmierbarer Bewegungsautomat, der ein erfindungsgemäßes Spannungswellengetriebe aufweist. In ganz besonders vorteilhafter Weise lässt sich unter Verwendung eines erfindungsgemäßen Spannungswellengetriebes ein besonders kompaktes motorisiertes Gelenk zum Verbinden von zwei relativ zueinander beweglichen Trägern eines programmierbaren Bewegungsautomaten, ausbilden. Das Gelenk kann einen Antriebsmotor beinhalten, dem das erfindungsgemäße Spannungswellengetriebe triebtechnisch nachgeschaltet ist.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel eines erfindungsgemäßen Spannungswellengetriebes,
- Fig. 2: ein zweites Ausführungsbeispiel eines erfindungsgemäßen Spannungswellengetriebes,
- Fig. 3: ein drittes Ausführungsbeispiel eines erfindungsgemäßen Spannungswellengetriebes,
- Fig. 4: ein Ausführungsbeispiel eines Aktuators, der ein erfindungsgemäßes Spannungswellengetriebe beinhaltet
- Fig. 5: ein viertes Ausführungsbeispiel eines erfindungsgemäßen Spannungswellengetriebes,
- Fig. 6: ein fünftes Ausführungsbeispiel eines erfindungsgemäßen Spannungswellengetriebes,
- Fig.7: eine Detailansicht des fünften Ausführungsbeispiels in einer Querschnittsdarstellung.

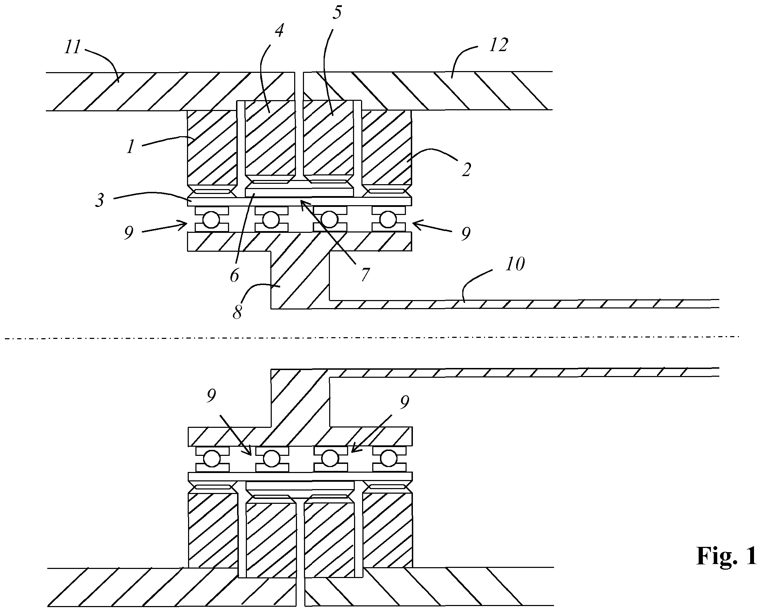

Fig. 1 zeigt ein erstes Ausführungsbeispiel eines erfindungsgemäßen Spannungswellengetriebes. Das Spannungswellengetriebe weist ein erstes starres, innenverzahntes Hohlrad 1 und ein zweites starres, innenverzahntes Hohlrad 2 auf. Die Verzahnungen des ersten und zweiten innenverzahnten Hohlrades 1, 2 stehen mit der Außenverzahnung einer ersten radialflexiblen, außenverzahnten Hülse 3 in Zahneingriff.

Das Spannungswellengetriebe weist außerdem ein drittes starres, innenverzahntes Hohlrad 4 und ein viertes starres, innenverzahntes Hohlrad 5 auf. Die Innenverzahnungen des dritten und vierten Hohlrades 4, 5 stehen mit der Außenverzahnung einer zweiten radialflexiblen, außenverzahnten Hülse 6 in Zahneingriff. Die erste radialflexible, außenverzahnte Hülse 3 weist einen Ankoppelabschnitt 7 auf, der frei von der Außenverzahnung ist und der koaxial von der zweiten radialflexiblen, außenverzahnten Hülse 6 umgeben ist. Konkret liegt eine Innenumfangsfläche der zweiten radialflexiblen, außenverzahnten Hülse 6 unmittelbar an dem Außenumfangsbereich des Ankoppelabschnitts 7 der ersten radialflexiblen Hülse 3 an. Das Anordnen der zweiten radialflexiblen, außenverzahnten Hülse 6 axial zwischen den endseitigen Teilen der Außenverzahnung der ersten radialflexiblen Hülse 3 kann beispielsweise dadurch erfolgen, dass der Durchmesser der ersten radialflexible Hülse 3 durch abkühlen vorübergehend verringert und der Durchmesser der zweiten radialflexiblen, außenverzahnten Hülse 6 durch erhitzen vorübergehend vergrößert wird, so dass die zweite radialflexible, außenverzahnte Hülse 6 beim Montagevorgang über die Außenverzahnung geschoben werden kann.

Das Spannungswellengetriebe weist einen Wellengenerator 8 auf, der die erste radialflexible Hülse 3 und die zweite radialflexible Hülse 7 in eine im Querschnitt ovale Form biegt, so dass die Außenverzahnung der ersten radialflexiblen, außenverzahnten Hülse 3 an zwei gegenüberliegenden Stellen mit den Innenverzahnungen des ersten und zweiten innenverzahnten Hohlrades 1, 2 in Zahneingriff gelangt. Hierzu kann der Wellengenerator 8 im Querschnitt beispielsweise selbst eine ovale Form aufweisen. Es ist jedoch auch möglich, dass der Wellengenerator 8 beispielsweise in Form eines sogenannten Tworollers ausgebildet ist, der zwei exzentrisch angeordnete Rollen aufweist, die auf der Innenseite der ersten radialflexiblen Hülse 3 abrollen und die erste radialflexible Hülse 3 in eine ovale Form biegen.

Im dargestellten Ausführungsbeispiel ist der Wellengenerator 8 mittels mehrerer radialflexibler Wälzlager 9 drehbar innerhalb der ersten radialflexiblen Hülse 3 gelagert. Bei dem dargestellten Ausführungsbeispiel überträgt der Wellengenerator 8 seine ovale Form über die radialflexiblen Wälzlager 9 auf die erste radialflexible Hülse 3. Diese wiederum überträgt ihre, durch den Wellengenerator bewirkte, ovale Form auf die unmittelbar anliegende zweite radialflexible Hülse 6, so dass deren Außenverzahnung an zwei gegenüberliegenden Stellen in Zahneingriff mit den Innenverzahnungen des dritten innenverzahnten Hohlrades 4 und des vierten innenverzahnten Hohlrades 5 gelangt.

Der Wellengenerator 8 kann mit einer ersten Welle 10, die insbesondere als Antriebswelle fungieren kann, zur Rotation angetrieben werden.

Das Spannungswellengetriebe ist als Dreiwellengetriebe ausgebildet und weist außer der ersten Welle 10 eine zweite Welle 11 und eine dritte Welle 12 auf. Das erste innenverzahnte Hohlrad 1 und das dritte innenverzahnte Hohlrad 4 sind beide drehfest mit der zweiten Welle 11 verbunden, während das zweite innenverzahnte Hohlrad 2 und das vierte innenverzahnte Hohlrad 5 beide drehfest mit der dritten Welle 12 verbunden sind.

Der Abschnitt der Verzahnung der ersten radialflexiblen, außenverzahnten Hülse 3, der mit der Verzahnung des ersten innenverzahnten Hohlrades 1 in Zahneingriff steht und der Abschnitt der Außenverzahnung der ersten radialflexiblen, außenverzahnen Hülse 3, die mit der Verzahnung des zweiten innenverzahnten Hohlrades 2 in Zahneingriff steht, weisen dieselbe Anzahl von Zähnen auf.

Vorzugsweise gehören die Abschnitte der Verzahnung der ersten radialflexiblen, außenverzahnten Hülse 3, die mit den Verzahnungen des ersten innenverzahnten Hohlrades und des zweiten innenverzahnten Hohlrades 2 in Zahneingriff stehen, zu derselben Verzahnung, die lediglich durch den verzahnungsfreien Ankoppelabschnitt 7 für die zweite radialflexible außenverzahnte Hülse 6 unterbrochen ist.

Die Außenverzahnung der zweiten radialflexiblen, außenverzahnten Hülse 6 weist dieselbe Anzahl von Zähnen auf, wie die Verzahnung der ersten radialflexiblen, außenverzahnten Hülse 3. Da der Durchmesser der zweiten radialflexiblen außenverzahnten Hülse geringfügig größer ist, als der Durchmesser der ersten radialflexiblen, außenverzahnten Hülse 3, weist die Verzahnung der zweiten radialflexiblen außenverzahnten Hülse 6 einen größeren Modul auf.

Das erste innenverzahnte Hohlrad 1 und das dritte innenverzahnte Hohlrad 4 weisen beide dieselbe Anzahl von Zähnen auf, wie die radialflexiblen, außenverzahnten Hülsen 3, 6. Hingegen weisen das zweite innenverzahnte Hohlrad 2 und das vierte innenverzahnte Hohlrad 5 beide zueinander dieselbe Anzahl von Zähnen auf, die jedoch höher ist, insbesondere um zwei Zähne höher, ist, als die Anzahl der Zähne der außenverzahnten Hülsen 3, 6. Genauso wie die Verzahnung der zweiten außenverzahnten, radialflexiblen Hülse 6 einen größeren Modul aufweist, als die Außenverzahnung der ersten außenverzahnten, radialflexiblen Hülse 3 weisen die Innenverzahnungen des dritten innenverzahnten Hohlrades 4 und des vierten innenverzahnten Hohlrades 5 ebenfalls einen größeren Modul auf, als die Innenverzahnung des ersten Hohlrades 1 und des zweiten Hohlrades 2, um ein ordnungsgemäßes Abwälzen der Verzahnungen im Betriebe des Getriebes zu gewährleisten.

Das beschriebene Spannungswellengetriebe beinhaltet genau genommen zwei Unterspannungswellengetriebe, wobei das erste Unterspannungswellengetriebe die erste außenverzahnte, radialflexible Hülse 3 und das erste innenverzahnte Hohlrad 1 sowie das zweite innenverzahnte Hohlrad 2 umfasst, während das zweite Unterspannungswellengetriebe im Wesentlichen die zweite außenverzahnte, radialflexible Hülse 6 und das dritte innenverzahnte Hohlrad 4 sowie das vierte innenverzahnte Hohlrad 5 umfasst. Die beiden Unterspannungswellengetriebe sind durch die drehfeste Verbindung des ersten innenverzahnten Hohlrades 1 mit dem dritten innenverzahnten Hohlrad 4, die drehfeste Verbindung des zweiten innenverzahnten Hohlrades 2 mit dem vierten innenverzahnten Hohlrad 5 und insbesondere durch die besondere Ausbildung der koaxial ineinander geschachtelten radialflexiblen Hülsen 3, 6 mechanisch parallel geschaltet.

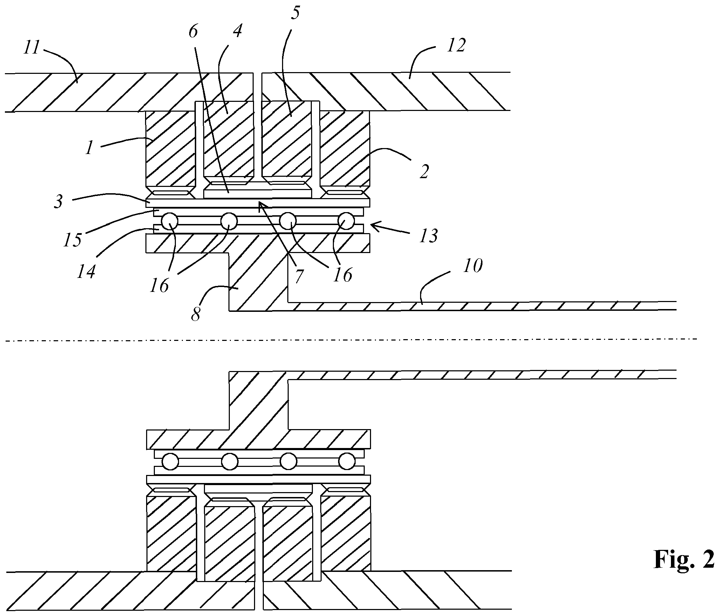

Figur 2 zeigt ein zweites Ausführungsbeispiel eines erfindungsgemäßen Spannungswellengetriebes. Dieses Spannungswellengetriebe unterscheidet sich von dem in Figur 1 dargestellten Ausführungsbeispiel dadurch, dass der Wellengenerator 8 bei diesem Ausführungsbeispiel nicht mit einzelnen Wälzlagern 9, sondern mittels eines einzigen vierreihigen, radialflexiblen Wälzlagers 13 rotierbar innerhalb der ersten radialflexiblen Hülse 3 gelagert ist. Das vierreihige Wälzlager 13 weist einen Innenring 14 und einen Außenring 15 mit jeweils vier umlaufenden Wälznuten auf, in denen die Wälzkörper 16 jeweils abrollen.

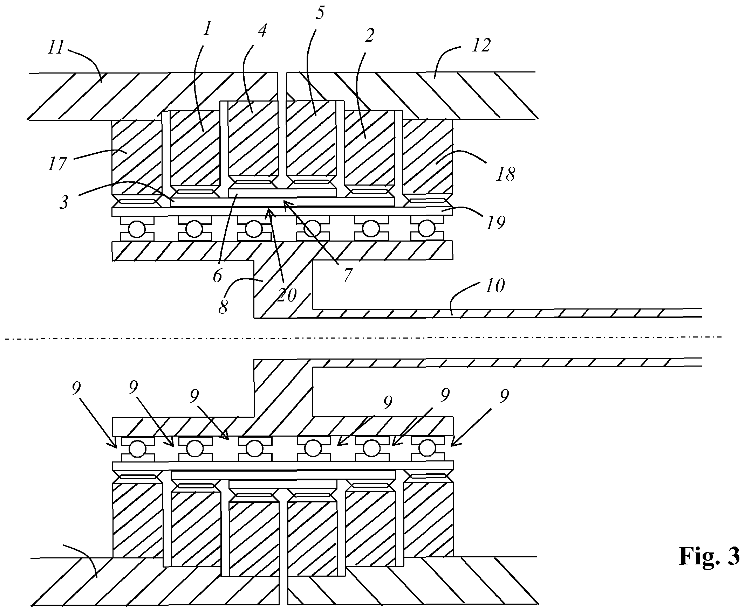

Fig. 3 zeigt ein drittes Ausführungsbeispiel eines erfindungsgemäßen Spannungswellengetriebes. Dieses Ausführungsbeispiel beinhaltet sämtliche Elemente des in Figur 1 gezeigten Spannungswellengetriebes. Zusätzliches ist ein fünftes starres, innenverzahntes Hohlrad 17 und ein sechstes starres, innenverzahntes Hohlrad 18 vorhanden, die beide mit der weiteren Außenverzahnung einer dritten, radialflexiblen außenverzahnten Hülse 19 in Zahneingriff stehen.

Die dritte radialflexible außenverzahnte Hülse 19 weist einen weiteren Ankoppelabschnitt 20 auf, der frei von der weiteren Außenverzahnung ist und der koaxial von der ersten radialflexiblen, außenverzahnten Hülse 3 umgeben ist. Konkret liegt eine Innenumfangsfläche der ersten radialflexiblen, außenverzahnten Hülse 3 unmittelbar an einer Außenumfangsfläche des weiteren Ankoppelabschnitts 20 der dritten radialflexiblen, außenverzahnten Hülse 19 an.

Der Wellengenerator 8 ist mittels mehrerer Wälzlager 9 innerhalb der dritten radialflexiblen, außenverzahnten Hülse 19 rotierbar gelagert und biegt die dritte radialflexible, außenverzahnte Hülse 19 zu einer ovalen Form, so dass deren Verzahnung an zwei gegenüberliegenden Stellen in Zahneingriff mit den fünften innenverzahnten Hohlrad 17 und dem sechsten innenverzahnten Hohlrad 18 gelangt.

Die so zu einer ovalen Form gebogene dritte radialflexible, außenverzahnte Hülse 19 biegt die erste radialflexible, außenverzahnte Hülse 3 in eine ovale Form, so dass die Außenverzahnung der ersten radialflexiblen, außenverzahnten Hülse 3 an zwei gegenüberliegenden Stellen mit den Innenverzahnungen des ersten und zweiten innenverzahnten Hohlrades 1, 2 in Zahneingriff gelangt. Die auf diese Weise in eine ovale Form gebogene erste radialflexible, außenverzahnte Hülse 3 biegt ihrerseits die zweite radialflexible, außenverzahnte Hülse 6 in eine ovale Form, so dass deren Außenverzahnung an zwei gegenüberliegenden Stellen in Zahneingriff mit den Innenverzahnungen des dritten innenverzahnten Hohlrades 4 und des vierten innenverzahnten Hohlrades 5 gelangt.

Das fünfte innenverzahnte Hohlrad 17 weist dieselbe Anzahl von Zähnen auf, wie das erste Hohlrad 1 und wie das dritte Hohlrad 5. Das sechste innenverzahnte Hohlrad 18 weist dieselbe Anzahl von Zähnen auf, wie das zweite Hohlrad 2 und das vierte Hohlrad 4.

Das fünfte innenverzahnte Hohlrad 17 ist über die zweite Welle 11 drehfest mit dem ersten innenverzahnten Hohlrad 1 und dem dritten innenverzahnten Hohlrad 4 verbunden. Das sechste innenverzahnte Hohlrad 18 ist über die dritte Welle 12 drehfest mit dem zweiten innenverzahnten Hohlrad 2 und drehfest mit dem vierten innenverzahnten Hohlrad 5 verbunden.

Die Verzahnung der dritten radialflexiblen, außenverzahnten Hülse 19 weist dieselbe Anzahl von Zähnen auf, wie die Verzahnung der ersten radialflexiblen, außenverzahnten Hülse 3 und die Verzahnung der zweiten radialflexiblen, außenverzahnten Hülse 6. Allerdings ist der Modul der Verzahnung der dritten radialflexiblen, außenverzahnten Hülse 19 auf Grund des geringeren Durchmessers kleiner als der der Verzahnung der der ersten radialflexiblen, außenverzahnten Hülse 3.

Im Wesentlichen beinhaltet das in Figur 3 dargestellte Spannungswellengetriebe eine Parallelschaltung von drei Unterspannungswellengetrieben, wobei das dritte, gegenüber dem in Figur 1 dargestellten Ausführungsbeispiel hinzugekommene Unterspannungswellengetriebe die dritte radial flexible, außenverzahnte Hülse 19 sowie das fünfte innenverzahnte Hohlrad 17 und das sechste innenverzahnte Hohlrad 18 beinhaltet. Nach demselben Prinzip könnten weiteren Unterspannungswellengetriebe parallel geschaltet werden.

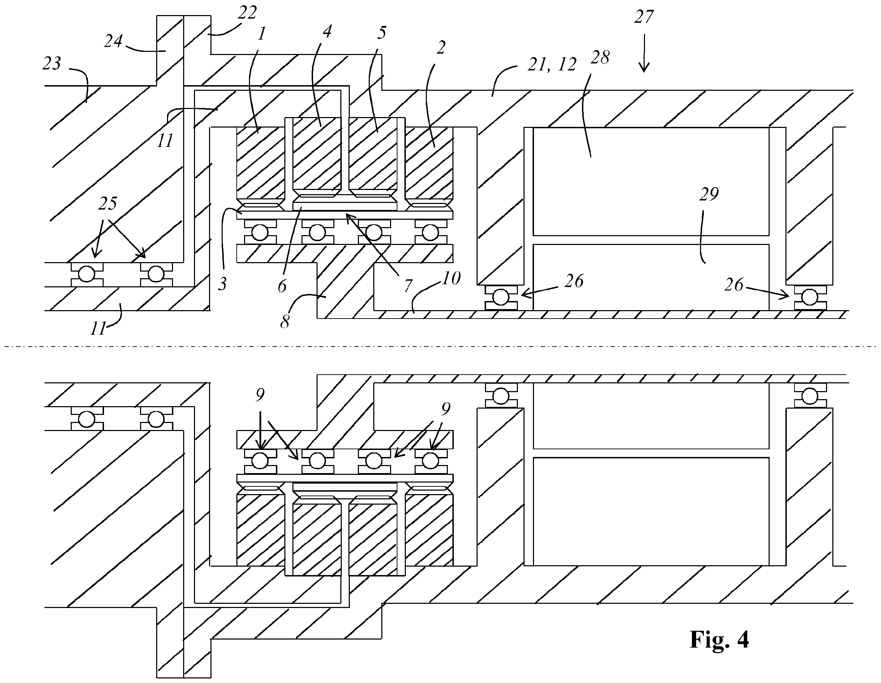

Figur 4 zeigt einen Aktuator, der im Wesentlichen das in Figur 1 dargestellte Spannungswellengetriebe beinhaltet. Der Aktuator weist einen ersten Gehäuseteil 21 auf, der gleichzeitig die dritte Welle 12 bildet und der einen ersten Flansch 22 aufweist. Außerdem ist ein zweites Gehäuseteil 23 vorhanden, der einen zweiten Flansch 24 aufweist. Die Gehäuseteile 21, 23 sind an den Flanschen 22, 24 miteinander verschraubt.

Die zweite Welle 11 dient bei diesem Ausführungsbeispiel als Abtriebswelle ausgebildet und verjüngt sich vom Spannungswellengetriebe weg auf einen geringeren Durchmesser. Darüber hinaus ist die zweite Welle 11 mittels weiterer Wälzlager 25 relativ zu dem zweiten Gehäuseteil 23 rotierbar gelagert.

Die erste Welle 10 ist mittels weiterer Wälzlager 26 relativ zu dem ersten Gehäuseteil 21 rotierbar gelagert.

Der Aktuator beinhaltet einen Antriebsmotor 27 mit einem Stator 28 und einem Rotor 29. Der Rotor 29 ist drehfest mit der ersten Welle 10, die als Antriebswelle für das Spannungswellengetriebe fungiert, verbunden. Der Stator 28 ist drehfest mit dem ersten Gehäuseteil 21 verbunden.

Wird die erste Welle 10 mittels des Antriebsmotors 27 zur Rotation angetrieben, sorgt der Wellengenerator 8 für einen umlaufenden Eingriff der Außenverzahnung der ersten radialflexiblen außenverzahnten Hülse 3 in dem ersten Hohlrad 1 und dem zweiten Hohlrad 2. Gleichzeitig kommt es zu einem umlaufenden Eingriff der Verzahnung der zweiten radialflexiblen, außenverzahnten Hülse 6 in dem dritten Hohlrad 3 und dem vierten Hohlrad 5. Aufgrund der unterschiedlichen Zähnezahlen des ersten Hohlrades 1 und des dritten Hohlrades 4 einerseits relativ zu dem zweiten Hohlrad 2 und dem vierten Hohlrad 5 andererseits kommt es zu einer Relativdrehung der als Abtriebswelle fungierenden zweiten Welle 11 relativ zu der dritten Welle 12. Aufgrund der besonderen Ausbildung des Spannungswellengetriebes kann bei radial kleinem Bauraum ein besonders hohes Drehmoment übertragen werden.

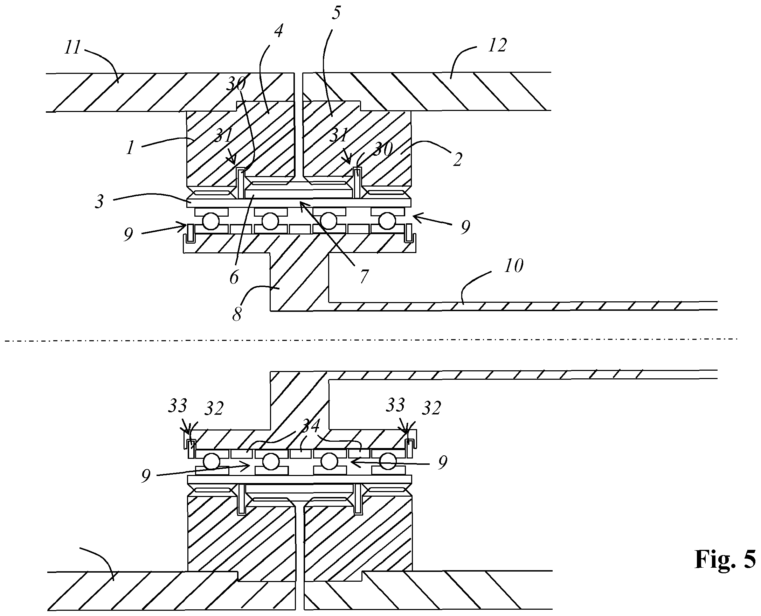

Fig. 5 zeigt ein viertes Ausführungsbeispiel eines erfindungsgemäßen Spannungswellengetriebes, das im Wesentlichen nach dem Prinzip des ersten Ausführungsbeispiels aufgebaut ist. Im Unterschied zu dem in Fig. 1 gezeigten Ausführungsbeispiel sind das erste innenverzahnte Hohlrad 1 und das dritte innenverzahnte Hohlrad 4 gemeinsam einstückig aus demselben Stück Rohmaterial hergestellt. Analog sind das vierte innenverzahnte Hohlrad 2 und das zweite innenverzahnte Hohlrad 2 ebenfalls gemeinsam einstückig hergestellt.

Außerdem sind zur Axialsicherung der zweiten radialflexiblen Hülse 6 radialflexible Sicherungsringe 30 vorhanden, die eine axiale Bewegung der zweiten radialflexiblen Hülse 6 blockieren. Die Sicherungsringe 30 sind jeweils in umlaufenden Nuten 31 der einstückig verbundenen Hohlräder 1, 4, 5, 2 gehalten.

Außerdem sind zur Axialsicherung der Innenringe der Wälzlager 9 weitere Sicherungsringe 32 in weitere umlaufende Nuten 33 des Wellengenerators 8 eingefügt und zwischen den Wälzlagern 9 Abstandshalteringe 34 angeordnet.

Die in Bezug auf das vierte Ausführungsbeispiel beschrieben Axialsicherungen können ohne weiteres auch bei den übrigen Ausführungsbeispielen realisiert werden.

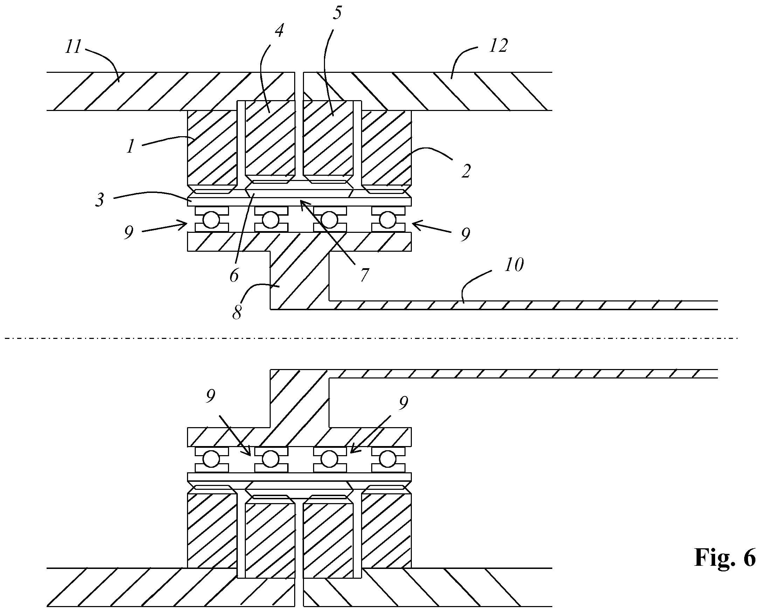

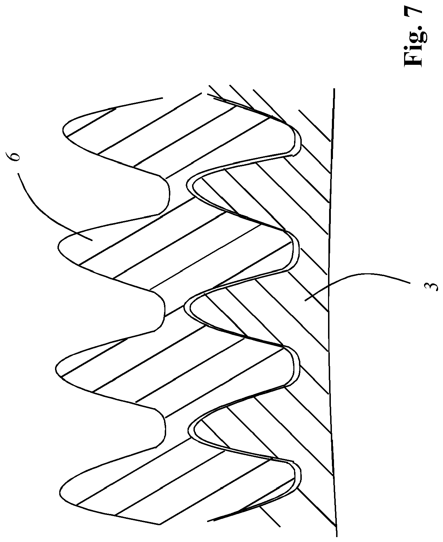

Fig. 6 zeigt ein viertes Ausführungsbeispiel eines erfindungsgemäßen Spannungswellengetriebes, das im Wesentlichen dem ersten Ausführungsbeispiel entspricht. Im Unterschied zu der in Fig. 1 Ausführung weist die erste radialflexible Hülse 3 eine nicht unterbrochene Außenverzahnung und die zweite radialflexible Hülse 6 zusätzlich eine komplementäre Innenverzahnung auf, so dass die erste radialflexible Hülse 3 und die zweite radialflexible Hülse 6 beim Zusammenbau des Getriebes axial ineinander geschoben werden können. Dies illustriert Fig. 7, die eine Detaildarstellung durch einen Querschnitt senkrecht zur Axialrichtung zeigt.

### Bezugszeichenliste:

- 1: erstes starres, innenverzahntes Hohlrad
- 2: zweites starres, innenverzahntes Hohlrad
- 3: erste radialflexible, außenverzahnten Hülse
- 4: drittes starres, innenverzahntes Hohlrad
- 5: viertes starres, innenverzahntes Hohlrad
- 6: zweite radialflexible, außenverzahnten Hülse
- 7: Ankoppelabschnitt
- 8: Wellengenerator
- 9: radialflexibles Wälzlager
- 10: erste Welle
- 11: zweite Welle
- 12: dritte Welle
- 13: vierreihiges radialflexibles Wälzlager
- 14: Innenring
- 15: Außenring
- 16: Wälzkörper
- 17: fünftes starres, innenverzahntes Hohlrad
- 18: sechstes starres, innenverzahntes Hohlrad
- 19: dritte radialflexible, außenverzahnten Hülse
- 20: weiterer Ankoppelabschnitt
- 21: erstes Gehäuseteil
- 22: erster Flansch
- 23: zweites Gehäuseteil
- 24: zweiter Flansch
- 25: weitere Wälzlager
- 26: weitere Wälzlager
- 27: Antriebsmotor
- 28: Stator
- 29: Rotor
- 30: Sicherungsring
- 31: umlaufende Nut
- 32: weiterer Sicherungsring
- 33: weitere umlaufende Nut
- 34: Abstandshaltering

## Patentansprüche

1. Spannungswellengetriebe mit vier innenverzahnten Hohlrädern (1, 2, 4, 5), von denen ein erstes Hohlrad (1) und ein zweites Hohlrad (2) mit einer ersten radialflexiblen, außenverzahnten Hülse (3) in Zahneingriff stehen und von denen ein drittes Hohlrad (4) und ein viertes Hohlrad (5) mit einer zweiten radialflexiblen, außenverzahnten Hülse (6) in Zahneingriff stehen, **dadurch gekennzeichnet, dass** die erste radialflexible, außenverzahnte Hülse (3) einen Ankoppelabschnitt (7) aufweist, der koaxial von der zweiten radialflexiblen, außenverzahnten Hülse (6) umgeben ist.

2. Spannungswellengetriebe nach Anspruch 1, **dadurch gekennzeichnet, dass**
a. die innenverzahnten Hohlräder (1, 2, 4, 5) koaxial zueinander, insbesondere koaxial nebeneinander, angeordnet sind, und/oder dass
b. das dritte und das vierte innenverzahnte Hohlrad (4, 5) räumlich zwischen dem ersten und dem zweiten innenverzahnen Hohlrad (1,2) angeordnet sind.

3. Spannungswellengetriebe nach Anspruch 1 oder 2, **dadurch gekennzeichnet, dass** das erste innenverzahnte Hohlrad (1) dieselbe Anzahl von Zähnen aufweist, wie das dritte innenverzahnte Hohlrad (4) und/oder dass das zweite innenverzahnte Hohlrad (2) dieselbe Anzahl von Zähnen aufweist, wie das vierte innenverzahnte Hohlrad (5).

4. Spannungswellengetriebe nach einem der Ansprüche 1 bis 3, **dadurch gekennzeichnet, dass**
a. das erste innenverzahnte Hohlrad (1) drehfest mit dem dritten innenverzahnten Hohlrad (4) verbunden ist oder dass das erste innenverzahnte Hohlrad (1) gemeinsam einstückig mit dem dritten innenverzahnten Hohlrad (4) aus demselben Stück Rohmaterial hergestellt ist, und/oder dass
b. das zweite innenverzahnte Hohlrad (2) drehfest mit dem vierten innenverzahnten Hohlrad (5) verbunden ist oder dass das zweite innenverzahnte Hohlrad (2) gemeinsam einstückig mit dem vierten innenverzahnten Hohlrad (5) aus demselben Stück Rohmaterial hergestellt ist.

5. Spannungswellengetriebe nach einem der Ansprüche 1 bis 4, **dadurch gekennzeichnet, dass**
a. der Ankoppelabschnitt (7) einen Außenumfangsbereich ohne Außenverzahnung aufweist, oder dass
b. der Ankoppelabschnitt (7) einen Außenumfangsbereich ohne Außenverzahnung aufweist, wobei eine Innenumfangsfläche der zweiten radialflexiblen Hülse (6) unmittelbar an dem Außenumfangsbereich ohne Außenverzahnung der ersten radialflexiblen Hülse (3) anliegt.

6. Spannungswellengetriebe nach einem der Ansprüche 1 bis 5, **dadurch gekennzeichnet, dass** wenigstens eine Axialsicherungsvorrichtung vorhanden ist, die die zweite radialflexible Hülse (6) gegen eine axiale Verschiebung relativ zu der ersten radialflexiblen Hülse (3) und/oder relativ zu einem der Hohlräder (1, 2, 4, 5) verhindert.

7. Spannungswellengetriebe nach Anspruch 6, **dadurch gekennzeichnet, dass**
a. die Axialsicherungsvorrichtung einen in einer umlaufenden Nut (31) eines der Hohlräder (1, 2, 4, 5) gehalterten Sicherungsring (30) aufweist, oder dass
b. die Axialsicherungsvorrichtung einen in einer umlaufenden Nut (31) eines der Hohlräder (1, 2, 4, 5) gehalterten Sicherungsring (30) aufweist, der als geschlitzter und/oder radialflexibler Federring ausgebildet ist, oder dass
c. die Axialsicherungsvorrichtung durch einen Vorsprung an einem der Hohlräder (1, 2, 4, 5) gebildet ist, oder dass
d. die Axialsicherungsvorrichtung durch eine wenigstens in einem Teilbereich modifizierte Verzahnung wenigstens eines der Hohlräder (1, 2, 4, 5) und/oder der zweiten radialflexiblen Hülse (6) gebildet ist, oder dass
e. die Verzahnung der ersten radialflexiblen Hülse (3) als Axialsicherungsvorrichtung fungiert und die zweite radialflexible Hülse (6) axial sichert.

8. Spannungswellengetriebe nach einem der Ansprüche 1 bis 7, **dadurch gekennzeichnet, dass**
a. ein Wellengenerator (8) vorhanden ist, der die erste radialflexible Hülse (3) und die zweite radialflexible Hülse (6) in eine ovale Form biegt, oder dass
b. ein Wellengenerator (8) vorhanden ist, der die erste radialflexible Hülse (3) und die zweite radialflexible Hülse (6) gemeinsam und gleichzeitig in eine ovale Form biegt, oder dass
c. die mittels eines Wellengenerators (8) zu einer ovalen Form gebogene erste radialflexible Hülse (3) die zweite radialflexible Hülse (6) zu einer ovalen Form biegt, oder dass
d. ein Wellengenerator (8) vorhanden ist, der mittels wenigstens eines radialflexiblen Lagers oder wenigstens eines radialflexiblen Wälzlagers (9) oder wenigstens eines mehrreihigen radialflexiblen Wälzlagers rotierbar innerhalb der ersten radialflexiblen Hülse (3) gelagert ist, oder dass
e. ein Wellengenerator (8) vorhanden ist, der axial genauso lang oder länger ist, als die erste radialflexible Hülse (3), oder dass
f. ein Wellengenerator (8) vorhanden ist, der mehrteilig aufgebaut ist und/oder der wenigstens zwei synchron angetriebene, insbesondere axial nebeneinander angeordnete, Wellengeneratorteile aufweist.

9. Spannungswellengetriebe nach einem der Ansprüche 1 bis 8, **dadurch gekennzeichnet, dass** ein fünftes und ein sechstes innenverzahntes Hohlrad (17, 18) vorhanden sind, die mit einer dritten radialflexiblen, außenverzahnten Hülse (19) in Zahneingriff stehen, wobei die dritte radialflexible, außenverzahnten Hülse (19) einen weiteren Ankoppelabschnitt (20) aufweist, der koaxial von der ersten radialflexiblen, außenverzahnten Hülse (3) umgeben ist.

10. Spannungswellengetriebe nach Anspruch 9, **dadurch gekennzeichnet, dass**
a. das fünfte und das sechste innenverzahnte Hohlrad (17, 18) koaxial zu dem ersten, zweiten, dritten und vierten innenverzahnten Hohlrad (1, 2, 4, 5) angeordnet sind, und/oder dass
b. das erste, zweite, dritte und vierte innenverzahnte Hohlrad (1, 2, 4, 5) räumlich zwischen dem fünften und dem sechsten innenverzahnten Hohlrad (17, 18) angeordnet sind, und/oder dass
c. das erste innenverzahnte Hohlrad (1) dieselbe Anzahl von Zähnen aufweist, wie das fünfte innenverzahnte Hohlrad (17) und/oder dass das zweite innenverzahnte Hohlrad (2) dieselbe Anzahl von Zähnen aufweist, wie das sechste innenverzahnte Hohlrad (18), und/oder dass
d. das erste innenverzahnte Hohlrad (1), das dritte innenverzahnte Hohlrad (4) und das fünfte innenverzahnte Hohlrad (17) drehfest miteinander verbunden sind oder dass das erste innenverzahnte Hohlrad (1), das dritte innenverzahnte Hohlrad (4) und das fünfte innenverzahnte Hohlrad (17) gemeinsam einstückig aus demselben Stück Rohmaterial hergestellt sind, und/oder dass
e. das zweite innenverzahnte Hohlrad (2), das vierte innenverzahnte Hohlrad (5) und das sechste innenverzahnte Hohlrad (18) drehfest miteinander verbunden sind oder dass das zweite innenverzahnte Hohlrad (2), das vierte innenverzahnte Hohlrad (5) und das sechste innenverzahnte Hohlrad (18) gemeinsam einstückig aus demselben Stück Rohmaterial hergestellt sind.

11. Spannungswellengetriebe nach Anspruch 9 oder 10, **dadurch gekennzeichnet, dass**
a. der weitere Ankoppelabschnitt (20) einen Außenumfangsbereich ohne Außenverzahnung aufweist, oder dass
b. der weitere Ankoppelabschnitt (20) einen Außenumfangsbereich ohne Außenverzahnung aufweist, wobei eine Innenumfangsfläche der ersten radialflexiblen Hülse (3) unmittelbar an dem Außenumfangsbereich ohne Außenverzahnung der dritten radialflexiblen Hülse (19) anliegt.

12. Spannungswellengetriebe nach einem der Ansprüche 9 bis 11, **dadurch gekennzeichnet, dass**
a. die mittels eines Wellengenerators (8) zu einer ovalen Form gebogene dritte radialflexible Hülse (19) die erste radialflexible Hülse (3) zu einer ovalen Form biegt und diese die zweite radialflexible Hülse (6) zu einer ovalen Form biegt, und/oder dass
b. ein Wellengenerator (8) vorhanden ist, der die erste, zweite und dritte radialflexible Hülse (3, 6, 19) gemeinsam und gleichzeitig in eine ovale Form biegt.

13. Aktives Fahrwerk, das zumindest ein Spannungswellengetriebe nach einem der Ansprüche 1 bis 12 aufweist.

14. Vorrichtung zum Verstellen des Expansionshubes und/oder des Verdichtungsverhältnisses eines Verbrennungsmotors, die zumindest ein Spannungswellengetriebe nach einem der Ansprüche 1 bis 12 aufweist.

15. Programmierbarer Bewegungsautomat, der ein Spannungswellengetriebe nach einem der Ansprüche 1 bis 12 aufweist, oder motorisiertes Gelenk zum Verbinden von zwei relativ zueinander beweglichen Trägern eines programmierbaren Bewegungsautomaten, das ein Spannungswellengetriebe nach einem der Ansprüche 1 bis 12 aufweist.

## Claims

1. Strain wave gear mechanism having four internally toothed ring gears (1, 2, 4, 5), of which a first ring gear (1) and a second ring gear (2) are in meshing engagement with a first radially flexible externally toothed sleeve (3), and of which a third ring gear (4) and a fourth ring gear (5) are in meshing engagement with a second radially flexible externally toothed sleeve (6), **characterized in that** the first radially flexible externally toothed sleeve (3) has a coupling portion (7) which is coaxially surrounded by the second radially flexible externally toothed sleeve (6) .

2. Strain wave gear mechanism according to Claim 1, **characterized in that**
a. the internally toothed ring gears (1, 2, 4, 5) are arranged coaxially to one another, in particular coaxially next to one another, and/or **in that**
b. the third and the fourth internally toothed ring gears (4, 5) are arranged spatially between the first and the second internally toothed ring gears (1, 2).

3. Strain wave gear mechanism according to Claim 1 or 2, **characterized in that** the first internally toothed ring gear (1) has the same number of teeth as the third internally toothed ring gear (4), and/or **in that** the second internally toothed ring gear (2) has the same number of teeth as the fourth internally toothed ring gear (5).

4. Strain wave gear mechanism according to one of Claims 1 to 3, **characterized in that**
a. the first internally toothed ring gear (1) is connected to the third internally toothed ring gear (4) in a rotationally locked manner, or **in that** the first internally toothed ring gear (1) is produced jointly in one piece with the third internally toothed ring gear (4) from the same piece of raw material, and/or **in that**
b. the second internally toothed ring gear (2) is connected to the fourth internally toothed ring gear (5) in a rotationally locked manner, or **in that** the second internally toothed ring gear (2) is produced jointly in one piece with the fourth internally toothed ring gear (5) from the same piece of raw material.

5. Strain wave gear mechanism according to one of Claims 1 to 4, **characterized in that**
a. the coupling portion (7) has an outer circumferential region without external toothing, or **in that**
b. the coupling portion (7) has an outer circumferential region without external toothing, wherein an inner circumferential surface of the second radially flexible sleeve (6) bears directly against the outer circumferential region without external toothing of the first radially flexible sleeve (3) .

6. Strain wave gear mechanism according to one of Claims 1 to 5, **characterized in that** the at least one axial securing device is present which prevents the second radially flexible sleeve (6) from being axially displaced relative to the first radially flexible sleeve (3) and/or relative to one of the ring gears (1, 2, 4, 5).

7. Strain wave gear mechanism according to Claim 6, **characterized in that**
a. the axial securing device has a securing ring (30) which is held in a peripheral groove (31) of one of the ring gears (1, 2, 4, 5), or **in that**
b. the axial securing device has a securing ring (30) which is held in a peripheral groove (31) of one of the ring gears (1, 2, 4, 5) and which takes the form of a slotted and/or radially flexible spring ring, or **in that**
c. the axial securing device is formed by a projection on one of the ring gears (1, 2, 4, 5), or **in that**
d. the axial securing device is formed by a toothing, which is modified at least in a subregion, of at least one of the ring gears (1, 2, 4, 5) and/or of the second radially flexible sleeve (6), or **in that**
e. the toothing of the first radially flexible sleeve (3) functions as an axial securing device and axially secures the second radially flexible sleeve (6).

8. Strain wave gear mechanism according to one of Claims 1 to 7, **characterized in that**
a. a wave generator (8) is present which bends the first radially flexible sleeve (3) and the second radially flexible sleeve (6) into an oval shape, or **in that**
b. a wave generator (8) is present which bends the first radially flexible sleeve (3) and the second radially flexible sleeve (6) jointly and at the same time into an oval shape, or **in that**
c. the first radially flexible sleeve (3) which is bent into an oval shape by means of a wave generator (8) bends the second radially flexible sleeve (6) into an oval shape, or **in that**
d. a wave generator (8) is present which is mounted so as to be rotatable within the first radially flexible sleeve (3) by means of at least one radially flexible bearing or at least one radially flexible rolling bearing (9) or at least one multi-row radially flexible rolling bearing, or **in that**
e. a wave generator (8) is present which is axially exactly as long or longer than the first radially flexible sleeve (3), or **in that**
f. a wave generator (8) is present which is of multi-part design and/or which has at least two synchronously driven wave generator parts which are arranged in particular axially next to one another.

9. Strain wave gear mechanism according to one of Claims 1 to 8, **characterized in that** a fifth and a sixth internally toothed ring gear (17, 18) are present which are in meshing engagement with a third radially flexible externally toothed sleeve (19), wherein the third radially flexible externally toothed sleeve (19) has a further coupling portion (20) which is coaxially surrounded by the first radially flexible externally toothed sleeve (3).

10. Strain wave gear mechanism according to Claim 9, **characterized in that**
a. the fifth and the sixth internally toothed ring gears (17, 18) are arranged coaxially to the first, second, third and fourth internally toothed ring gears (1, 2, 4, 5), and/or **in that**
b. the first, second, third and fourth internally toothed ring gears (1, 2, 4, 5) are arranged spatially between the fifth and the sixth internally toothed ring gears (17, 18), and/or in that
c. the first internally toothed ring gear (1) has the same number of teeth as the fifth internally toothed ring gear (17), and/or **in that** the second internally toothed ring gear (2) has the same number of teeth as the sixth internally toothed ring gear (18), and/or **in that**
d. the first internally toothed ring gear (1), the third internally toothed ring gear (4) and the fifth internally toothed ring gear (17) are connected to one another in a rotationally locked manner, or **in that** the first internally toothed ring gear (1), the third internally toothed ring gear (4) and the fifth internally toothed ring gear (17) are produced jointly in one piece from the same piece of raw material, and/or **in that**
e. the second internally toothed ring gear (2), the fourth internally toothed ring gear (5) and the sixth internally toothed ring gear (18) are connected to one another in a rotationally locked manner, or **in that** the second internally toothed ring gear (2), the fourth internally toothed ring gear (5) and the sixth internally toothed ring gear (18) are produced jointly in one piece from the same piece of raw material.

11. Strain wave gear mechanism according to Claim 9 or 10, **characterized in that**
a. the further coupling portion (20) has an outer circumferential region without external toothing, or **in that**
b. the further coupling portion (20) has an outer circumferential region without external toothing, wherein an inner circumferential surface of the first radially flexible sleeve (3) bears directly against the outer circumferential region without external toothing of the third radially flexible sleeve (19) .

12. Strain wave gear mechanism according to one of Claims 9 to 11, **characterized in that**
a. the third radially flexible sleeve (19) which is bent into an oval shape by means of a wave generator (8) bends the first radially flexible sleeve (3) into an oval shape, and the latter bends the second radially flexible sleeve (6) into an oval shape, and/or **in that**
b. a wave generator (8) is present which bends the first, second and third radially flexible sleeves (3, 6, 19) jointly and at the same time into an oval shape.

13. Active chassis which has at least one strain wave gear mechanism according to one of Claims 1 to 12.

14. Device for adjusting the expansion stroke and/or the compression ratio of an internal combustion engine, which device has at least one strain wave gear mechanism according to one of Claims 1 to 12.

15. Programmable automatic moving device, which has a strain wave gear mechanism according to one of Claims 1 to 12, or motorized joint for connecting two carriers, which are movable relative to one another, of a programmable automatic moving device, which has a strain wave gear mechanism according to one of Claims 1 to 12.

## Revendications

1. Transmission à démultiplication harmonique comprenant quatre couronnes à denture intérieure (1, 2, 4, 5), dont une première couronne (1) et une deuxième couronne (2) sont en engagement denté avec une première douille (3) à denture extérieure radialement flexible et dont une troisième couronne (4) et une quatrième couronne (5) sont en engagement denté avec une deuxième douille (6) à denture extérieure radialement flexible, **caractérisée en ce que** la première douille (3) à denture extérieure radialement flexible présente une portion d'accouplement (7) qui est entourée coaxialement par la deuxième douille (6) à denture extérieure radialement flexible.

2. Transmission à démultiplication harmonique selon la revendication 1, **caractérisée en ce que**
a. les couronnes à denture intérieure (1, 2, 4, 5) sont disposées coaxialement les unes aux autres, en particulier coaxialement les unes à côté des autres, et/ou **en ce que**
b. la troisième et la quatrième couronne à denture intérieure (4, 5) sont disposées spatialement entre la première et la deuxième couronne à denture intérieure (1, 2).

3. Transmission à démultiplication harmonique selon la revendication 1 ou 2, **caractérisée en ce que** la première couronne à denture intérieure (1) présente le même nombre de dents que la troisième couronne à denture intérieure (4) et/ou **en ce que** la deuxième couronne à denture intérieure (2) présente le même nombre de dents que la quatrième couronne à denture intérieure (5).

4. Transmission à démultiplication harmonique selon l'une quelconque des revendications 1 à 3, **caractérisée en ce que**
a. la première couronne à denture intérieure (1) est connectée de manière solidaire en rotation à la troisième couronne à denture intérieure (4) ou **en ce que** la première couronne à denture intérieure (1) est fabriquée en commun d'une seule pièce avec la troisième couronne à denture intérieure (4) à partir de la même pièce de matériau brut, et/ou **en ce que**
b. la deuxième couronne à denture intérieure (2) est connectée de manière solidaire en rotation à la quatrième couronne à denture intérieure (5) ou **en ce que** la deuxième couronne à denture intérieure (2) est fabriquée en commun d'une seule pièce avec la quatrième couronne à denture intérieure (5) à partir de la même pièce de matériau brut.

5. Transmission à démultiplication harmonique selon l'une quelconque des revendications 1 à 4, **caractérisée en ce que**
a. la portion d'accouplement (7) présente une région périphérique extérieure sans denture extérieure, ou **en ce que**
b. la portion d'accouplement (7) présente une région périphérique extérieure sans denture extérieure, une surface périphérique intérieure de la deuxième douille (6) radialement flexible s'appliquant directement contre la région périphérique extérieure sans denture extérieure de la première douille (3) radialement flexible.

6. Transmission à démultiplication harmonique selon l'une quelconque des revendications 1 à 5, **caractérisée en ce qu'**il est prévu au moins un dispositif de fixation axiale qui empêche la deuxième douille (6) radialement flexible de se déplacer axialement par rapport à la première douille (3) radialement flexible et/ou par rapport à l'une des couronnes (1, 2, 4, 5).

7. Transmission à démultiplication harmonique selon la revendication 6, **caractérisée en ce que**
a. le dispositif de fixation axiale présente une bague de fixation (30) fixée dans une rainure périphérique (31) de l'une des couronnes (1, 2, 4, 5) ou **en ce que**
b. le dispositif de fixation axiale présente une bague de fixation (30) fixée dans une rainure périphérique (31) de l'une des couronnes (1, 2, 4, 5), qui est réalisée sous forme de bague élastique fendue et/ou radialement flexible, ou en ce que
c. le dispositif de fixation axiale est formé par une saillie au niveau de l'une des couronnes (1, 2, 4, 5), ou **en ce que**
d. le dispositif de fixation axiale est formé par une denture modifiée au moins dans une région partielle, d'au moins l'une des couronnes (1, 2, 4, 5) et/ou de la deuxième douille (6) radialement flexible, ou **en ce que**
e. la denture de la première douille (3) radialement flexible sert de dispositif de fixation axiale et fixe axialement la deuxième douille (6) radialement flexible.

8. Transmission à démultiplication harmonique selon l'une quelconque des revendications 1 à 7, **caractérisée en ce que**
a. un générateur d'ondes (8) est prévu, lequel courbe la première douille (3) radialement flexible et la deuxième douille (6) radialement flexible suivant une forme ovale, ou **en ce que**
b. un générateur d'ondes (8) est prévu, lequel courbe la première douille (3) radialement flexible et la deuxième douille (6) radialement flexible suivant une forme ovale en commun et simultanément, ou **en ce que**
c. la première douille (3) radialement flexible courbée suivant une forme ovale au moyen d'un générateur d'ondes (8) courbe la deuxième douille (6) radialement flexible suivant une forme ovale, ou **en ce que**
d. un générateur d'ondes (8) est prévu, lequel est supporté au moyen d'au moins un palier radialement flexible ou d'au moins un palier à roulement radialement flexible (9) ou d'au moins un palier à roulement radialement flexible à plusieurs rangées, de manière à pouvoir tourner à l'intérieur de la première douille (3) radialement flexible, ou **en ce que**
e. un générateur d'ondes (8) est prévu, lequel est aussi long ou plus long axialement que la première douille (3) radialement flexible, ou en ce que
f. un générateur d'ondes (8) est prévu, lequel est réalisé en plusieurs parties et/ou présente au moins deux parties de générateur d'ondes entraînées de manière synchrone, en particulier disposées axialement l'une à côté de l'autre.

9. Transmission à démultiplication harmonique selon l'une quelconque des revendications 1 à 8, **caractérisée en ce qu'**une cinquième et une sixième couronne à denture intérieure (17, 18) sont prévues, lesquelles sont en engagement denté avec une troisième douille (19) à denture extérieure radialement flexible, la troisième douille (19) à denture extérieure radialement flexible présentant une portion d'accouplement supplémentaire (20), qui est entourée coaxialement par la première douille (3) à denture extérieure radialement flexible.

10. Transmission à démultiplication harmonique selon la revendication 9, **caractérisée en ce que**
a. la cinquième et la sixième couronne à denture intérieure (17, 18) sont disposées coaxialement aux première, deuxième, troisième et quatrième couronnes à denture intérieure (1, 2, 4, 5), et/ou **en ce que**
b. les première, deuxième, troisième et quatrième couronnes à denture intérieure (1, 2, 4, 5) sont disposées spatialement entre la cinquième et la sixième couronne à denture intérieure (17, 18), et/ou **en ce que**
c. la première couronne à denture intérieure (1) présente le même nombre de dents que la cinquième couronne à denture intérieure (17) et/ou **en ce que** la deuxième couronne à denture intérieure (2) présente le même nombre de dents que la sixième couronne à denture intérieure (18), et/ou **en ce que**
d. la première couronne à denture intérieure (1), la troisième couronne à denture intérieure (4) et la cinquième couronne à denture intérieure (17) sont connectées les unes aux autres de manière solidaire en rotation ou **en ce que** la première couronne à denture intérieure (1), la troisième couronne à denture intérieure (4) et la cinquième couronne à denture intérieure (17) sont fabriquées en commun d'une seule pièce à partir de la même pièce de matériau brut, et/ou en ce que
e. la deuxième couronne à denture intérieure (2), la quatrième couronne à denture intérieure (5) et la sixième couronne à denture intérieure (18) sont connectées les unes aux autres de manière solidaire en rotation ou **en ce que** la deuxième couronne à denture intérieure (2), la quatrième couronne à denture intérieure (5) et la sixième couronne à denture intérieure (18) sont fabriquées en commun d'une seule pièce à partir de la même pièce de matériau brut.

11. Transmission à démultiplication harmonique selon la revendication 9 ou 10, **caractérisée en ce que**
a. la portion d'accouplement supplémentaire (20) présente une région périphérique extérieure sans denture extérieure ou **en ce que**
b. la portion d'accouplement supplémentaire (20) présente une région périphérique extérieure sans denture extérieure, une surface périphérique intérieure de la première douille (3) radialement flexible s'appliquant directement contre la région périphérique extérieure sans denture extérieure de la troisième douille (19) radialement flexible.

12. Transmission à démultiplication harmonique selon l'une quelconque des revendications 9 à 11, **caractérisée en ce que**
a. la troisième douille (19) radialement flexible courbée suivant une forme ovale au moyen d'un générateur d'ondes (8) courbe la première douille (3) radialement flexible suivant une forme ovale, et celle-ci courbe la deuxième douille (6) radialement flexible suivant une forme ovale, et/ou **en ce que**
b. un générateur d'ondes (8) est prévu, lequel courbe les première, deuxième et troisième douilles (3, 6, 19) radialement flexibles ensemble et simultanément suivant une forme ovale.

13. Train de roulement actif, qui présente au moins une transmission à démultiplication harmonique selon l'une quelconque des revendications 1 à 12.

14. Dispositif de réglage de la course d'expansion et/ou du rapport de compression d'un moteur à combustion interne, qui présente au moins une transmission à démultiplication harmonique selon l'une quelconque des revendications 1 à 12.

15. Automate de déplacement programmable, qui présente une transmission à démultiplication harmonique selon l'une quelconque des revendications 1 à 12, ou articulation motorisée prévue pour connecter deux supports déplaçables l'un par rapport à l'autre d'un automate de déplacement programmable, qui présente une transmission à démultiplication harmonique selon l'une quelconque des revendications 1 à 12.
